# EUROPEAN PATENT SPECIFICATION

(11) **EP 3 962 020 B1**
(45) Date of publication and mention of the grant of the patent: **04.10.2023**
(21) Application number: 21181947.9
(22) Date of filing: 28.06.2021
(51) Int. Cl.: H04L 9/32, H04L 9/08, H04L 9/00, H04L 9/40, G06Q 20/38, G06Q 20/40

(54) **INFORMATION SHARING METHODS AND SYSTEMS**
VERFAHREN UND SYSTEME ZUR GEMEINSAMEN NUTZUNG VON INFORMATIONEN
PROCÉDÉS ET SYSTÈMES DE PARTAGE D'INFORMATIONS

(30) Priority: 31.08.2020 CN 202010898797
(43) Date of publication of application: 02.03.2022
(73) Proprietor: Alipay (Hangzhou) Information Technology Co., Ltd., Hangzhou, Zhejiang 310000 (CN)
(72) Inventor: WANG, Xinmin, Hangzhou, 310000 (CN); YANG, Renhui, Hangzhou, 310000 (CN); CHEN, Yuan, Hangzhou, 310000 (CN); YANG, Wenyu, Hangzhou, 310000 (CN); QIAN, Feng, Hangzhou, 310000 (CN); GUO, Qianting, Hangzhou, 310000 (CN); LI, Shubo, Hangzhou, 310000 (CN)
(74) Representative: Goddar, Heinz J.

(56) References cited:
- US-A1- 2013 191 884
- US-A1- 2019 121 958
- US-A1- 2020 021 438

## Description

### TECHNICAL FIELD

Embodiments of the present specification belong to the field of blockchain technologies, and in particular, relate to information sharing methods and systems.

### BACKGROUND

A blockchain is a new application mode of computer technologies such as distributed data storage, point-to-point transmission, a consensus mechanism, and an encryption algorithm. A blockchain is a chained data structure obtained by combining data blocks in chronological order, and uses a cryptography method to ensure that a distributed ledger cannot be tampered with or forged. Because a blockchain has features such as de-centralization, non-tampering, and autonomy, the blockchain is attracting more attention and more widely applied.

US 2013/191884 A1 discloses: a user equipment (UE) may perform functions locally, such as on a trusted module that resides within the UE. For example, a UE may perform functions associated with a single sign-on protocol, such as OpenID Connect for example, via a local identity provider function. The UE may generate identity tokens and access tokens that can be used by a service provider to retrieve user information, such as identity information and/or user attributes. User attributes may be retrieved via a user information endpoint that may reside locally on the UE or on a network entity. A service provider may grant a user access to a service based on the information that it retrieves using the tokens.

US 2020/021438 A1 discloses a method that includes maintaining encrypted identity data associated with a user, the encrypted identity data representative of a digital identity of the user, receiving an access request from a service provider system for the service provider system to have access to the digital identity of the user when the user attempts to access a service provided by the service provider system, transmitting, in response to the access request, an authorization request to a computing device associated with the user, the authorization request prompting the user to authorize sharing of the digital identity with the service provider system, receiving, from the computing device, authorization data indicating that the user authorizes sharing of the digital identity with the service provider system, and providing, in response to receiving the authorization data from the computing device, the service provider system with access to the digital identity.

US 2019/121958 A1 discloses a method of providing identity services includes: receiving identity data for an individual for which the identity provider has provided an identity; generating a transaction to store an identifier representing the identity data in a data structure on a blockchain of a distributed system; sending the transaction to at least one node of the distributed system; and generating an identity token incorporating the identifier representing the identity data. An embodiment of a method of verifying an identity includes: receiving data extracted from the identity token, wherein the extracted data includes an identifier representing the identity data; determining whether a data structure containing the extracted identifier representing the identity data is stored on a blockchain of a distributed system; and outputting an indication of a validity of an identity associated with the identity data based on the determination.

### SUMMARY

An objective of the present disclosure is to provide information sharing methods and systems, including:
In a first aspect of the present invention, an information sharing method is provided as defined by the appended set of claims. The includes the following:
A sales agency receives basic data of a user, and sends a user ID of the user to a financial institution; the financial institution sends a data sharing request to the sales agency using a privacy computing unit, where the data sharing request includes the user ID corresponding to user basic data that is expected to be shared; the privacy computing unit obtains, from the sales agency, the encrypted user basic data corresponding to the user ID, and decrypts the encrypted user basic data, so as to perform matching on the decrypted user basic data to obtain a matching result; and the privacy computing unit sends the matching result to the financial institution.

**A** first smart contract is deployed in the privacy computing unit, and the first smart contract is used to receive an invoking request sent by the financial institution, and in response to the invoking request, the privacy computing unit sends the data sharing request to the sales agency. Further, the privacy computing unit receives a transaction that is initiated by the sales agency and that invokes a second smart contract deployed at the privacy computing unit, wherein parameters in the transaction comprise the user ID and the encrypted user basic data corresponding to the user ID.

According to a second aspect of the present invention, an information sharing system is provided as defined by the appended set of claims. The system includes: a sales agency; a financial institution; and a privacy computing unit, wherein the system is configured to perform the method according to the first aspect.

According to a third aspect of the present invention, a privacy computing unit is provided as defined by the appended set of claims.

According to a fourth aspect of the present invention, a method performed by a privacy computing unit is provided as defined by the appended set of claims.

### BRIEF DESCRIPTION OF DRAWINGS

To describe the technical solutions in the embodiments of the present specification more clearly, the following briefly describes the accompanying drawings needed for describing the embodiments. Clearly, the accompanying drawings in the following description show merely some embodiments of the present specification, and a person of ordinary skill in the art can still derive other drawings from these accompanying drawings without creative efforts.
FIG. 1 is a schematic diagram illustrating a system architecture, according to some embodiments of the present specification;
FIG. 2 is a schematic diagram illustrating a system architecture, according to another embodiment of the present specification;
FIG. 3 is a schematic flowchart illustrating an information sharing method, according to some embodiments of the present specification;
FIG. 4 is an architectural diagram of providing a verification function by a financial institution by using a decentralized identity service (DIS), according to some embodiments of the present specification;
FIG. 5 is a flowchart of providing a verification function by a financial institution, according to some embodiments of the present specification; and
FIG. 6 is a schematic flowchart illustrating another information sharing method, according to some embodiments of the present specification.

### DESCRIPTION OF EMBODIMENTS

To make a person skilled in the art better understand the technical solutions in the present specification, the following clearly and comprehensively describes the technical solutions in the embodiments of the present specification with reference to the accompanying drawings in the embodiments of the present specification. Clearly, the described embodiments are merely some rather than all of the embodiments of the present specification. All other embodiments obtained by a person of ordinary skill in the art based on the embodiments of the present specification without creative efforts shall fall within the protection scope of the present specification.

Data sharing is often needed by institutions to process services. A single institution is often unable to obtain enough information to process a service, and there are needs to obtain information from other institutions. For example, many countries require financial institutions to provide anti-money laundering audit results in the requirements of anti-money laundering (AML) compliance. At present, many national central banks and large financial institutions have tried to improve efficiency and accuracy by using blockchains in the field of anti-money laundering and to meet regulatory requirements. Meanwhile, data, as resources, its mobility and accessibility are the foundation of many data applications and industry development. However, privacy protection in data exchange and sharing is a challenge to industry development. The following still uses the previously-mentioned anti-money laundering as an example for description.

Anti-money laundering is a measure to prevent money laundering activities that cover up and conceal sources and nature of earnings from drug crimes, organized crimes of a gangdom, terrorist crimes, smuggling crimes, corruption and bribery crimes, and crimes against financial management order by using various means. Common money laundering paths involve fields such as banking, insurances, securities, and real estate. Most anti-money laundering efforts include three core aspects:
1. Customer identification system. During establishment of a service relationship or a transaction with a customer, the subject of the anti-money laundering obligation shall verify and record an identity of the customer based on an actual and valid identity card, and update the customer's identity information in time during the existence of the service relationship.
2. Large and suspicious transaction report (STR) system Illegal capital flows are usually characterized by large amounts and abnormal transactions. Therefore, the STR is stipulated in laws. For the amount of transactions that reached certain standard and abnormal transactions without a legitimate purpose, financial institutions are required to report to the anti-money laundering administrative department in a timely method for the purpose of tracing illegal crimes.
3. Customer identity information and transaction record retention rules. The retention of customer identity information and transaction records means that financial institutions take the necessary measures to save customer identity information and transaction information for a certain period of time based on laws, and can provide evidence for tracing illegal crimes.

The customer identity identification system, which is commonly referred to as Know Your Customer (KYC), refers to obtaining customer-related identification information, including knowing the identity of the customer when establishing a service relationship with the customer, knowing the purpose of the transaction, knowing the source and whereabouts of the capital, knowing the daily service activities and financial transactions of the customer, etc., which are the bases for anti-money laundering.

In an existing implementation, there is a cooperative relationship between a sales institution and a sales agency of some financial products. A financial institution sells its financial products through a sales agency, for example, a network platform sells financial products of a fund company. In this case, customers who buy financial products are often customers of the sales agency. Based on the regulatory requirements, a KYC verification result for the customer is needed for financial product sales. As mentioned above, customers who purchase financial products are direct customers of a sales agency. The sales agency usually can directly obtain basic information of users, thus having the KYC capability. Based on requirements of data privacy protection, the sales agency usually cannot directly transfer KYC basic data and KYC results to the sales institution. The sales institution cannot perform independent KYC without the KYC basic data. Based on the regulatory requirements, the sales institution also needs to have the KYC verification result. In this case, the sales institution cannot perform KYC, and cannot meet the regulatory requirements since KYC is not fulfilled properly.

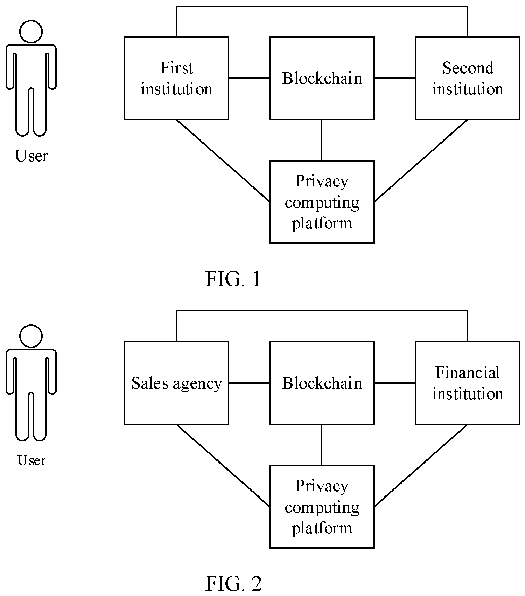

As shown in FIG. 1, embodiments of an information sharing method provided in the present specification can include roles in FIG. 1. A first institution can directly receive user information, so as to complete certain processing work based on the user information, for example, KYC verification mentioned in the KYC scenario. In addition, the first institution can provide a KYC verification result externally, or can provide basic data required for KYC verification externally. A second institution can be directly connected to the first institution. In addition, both the first institution and the second institution can be connected to a blockchain system, and can be connected to a privacy computing platform. By using the privacy computing platform, a predetermined rule can be executed in a trusted security computing environment, thereby completing a task such as KYC verification.

The following describes the previously-mentioned information sharing method with reference to the KYC service in the previously-mentioned anti-money laundering.

As mentioned above, with its own platform/capability directly oriented to customers, a sales agency can sell financial products on behalf of a financial institution. For example, a bank can sell fund products on behalf of a fund company or insurance products on behalf of an insurance institution. For another example, a payment platform can sell fund products on behalf of a fund company or insurance products on behalf of an insurance institution. In order to meet the regulatory requirements, the sales agency needs to have the KYC verification result for the customer, and the financial institution also needs to have the KYC verification result for the customer.

With reference to FIG. 2, as shown in FIG. 2, a sales agency can directly receive user information, so as to complete certain processing work based on the user information, for example, KYC verification mentioned in the KYC scenario. In addition, the sales agency can provide a KYC verification result externally, or can provide basic data required for KYC verification externally. A financial institution can be directly connected to the sales agency. In addition, both the sales agency and the financial institution can be connected to a blockchain system, and can be connected to a privacy computing platform. By using the privacy computing platform, a predetermined rule can be executed in a trusted security computing environment, thereby completing a task such as KYC verification.

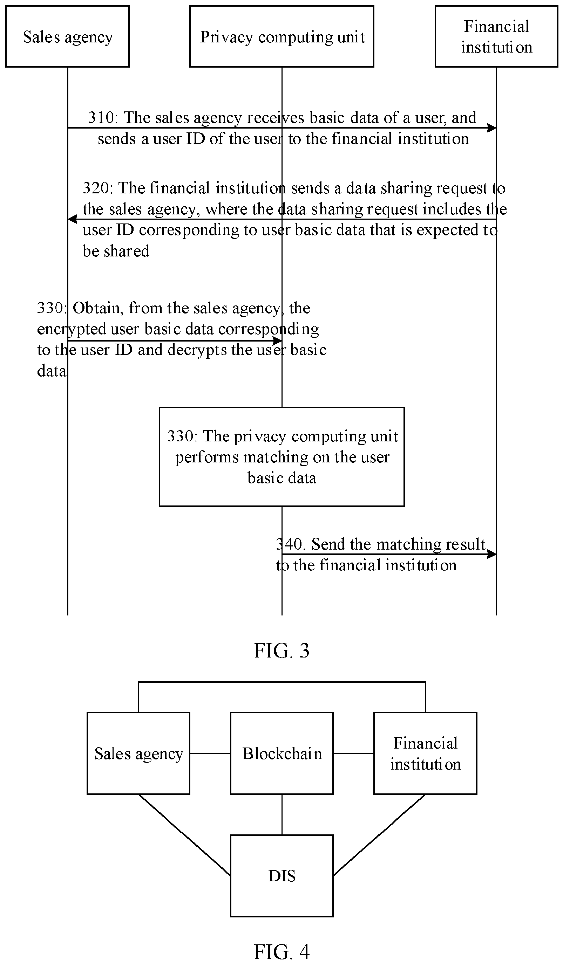

A schematic flowchart illustrating an information sharing method provided in the present specification can be shown in FIG. 3, including:

Step 310: A sales agency receives basic data of a user, and sends a user ID of the user to a financial institution.

The user purchases financial products of the financial institution through the sales agency. The sales agency can request the user to provide basic data for KYC verification. Such a user can be an individual user, an enterprise user, etc. For an individual user, the basic data can include a part or all of information such as name, gender, nationality, certificate type, certificate number, age, occupation, mobile phone number, contact address, etc. of the individual. For an enterprise user, the basic data can include a part or all of information such as name, business license number, business place address, name of legal representative, certificate type, certificate number, validity period, etc. of the enterprise. Most of the information is sensitive and is not expected to be output outside the sales agency.

The user ID can be an account registered by the user at the sales agency, or an account allocated to the user by a system of the sales agency when the user initiates a purchase operation at the sales agency. Such an account can be, for example, a character string. The user ID should specifically identify a user. The corresponding field is information of the individual user or the enterprise user as described above.

For an individual user, if an identity card is uniformly used as the certificate type, the user ID can also be an identity card number. However, the identity card number is actually also personal privacy data. Therefore, considering that personal privacy data should not be disclosed, hash processing can be performed on the identity card number. Because hash calculation has a unidirectional feature and a feature of hiding original information, and a good hash function has an anti-collision capability, that is, there is a very high probability that hash values obtained by different inputs are also different, a hash calculation result (or referred to as a digest value) can be used as a user ID. This is also the case for the mobile phone number.

Similarly, hash calculation can be performed after a group of data of a user is concatenated in order, and a digest value obtained is used as a user ID, for example, a digest value obtained by hash(name + certificate type + certificate number) is used as a user ID, where "+" can represent sequential concatenation of characters beforehand and afterward. KYC in anti-money laundering generally has a relatively high requirement for data security. To further strengthen data security protection, a salting operation can also be performed in hash calculation, for example, hash(name + certificate type + certificate number +salt), where salt is a value generated based on a predetermined rule.

The sales agency can prompt the user to provide the basic data when the user registers, or can request the user to provide the basic data when the user initiates purchasing of a financial product on the sales agency platform.

The sales agency can send the user ID to the financial institution, for example, can send the user ID to the financial institution in a process of transmitting order information of the financial product to the financial institution. Specifically, the sales agency can directly send the user ID to the financial institution, for example, send the previously-mentioned digest value obtained through hash processing to the financial institution, or can encrypt and send the user ID to the financial institution to improve security of data transmission, for example, encrypt and send the identity card number/the mobile phone number used as the user ID to the financial institution, or send the digest value obtained through hash processing to the financial institution. For the encrypted sending to the financial institution, the user ID can be encrypted and sent to the financial institution by the sales agency in a symmetric or asymmetric encryption method. If symmetric encryption is used, that is, a case that an encryption key and a decryption key are the same key, the key can be obtained through a key negotiation process between the sales agency and the financial institution. If asymmetric encryption is used, that is, an encryption key and a decryption key are two different but corresponding keys, one is a public key for encryption, and the another is a private key for decryption, generally, the sales agency can encrypt the user ID in the verification result by using a public key of the financial institution, and then send the user ID to the financial institution, so the financial institution decrypts the user ID by using a corresponding private key.

To further improve security of data transmission, that is, although encrypted data is transmitted, an incorrect recipient is not expected to receive the data. Therefore, before sending the user ID to the financial institution, the sales agency can first acknowledge an identity of the counterpart, which is the financial institution. There are several methods for determining the identity of the counterpart. An implementation of using a distributed digital identity technology combined with a blockchain is listed here. A blockchain can provide a decentralized (or weakly centralized), non-tampering (or difficult to tamper with), trusted distributed ledger, and can provide a secure, stable, transparent, auditable, and efficient method of recording transactions and data information interaction. A blockchain network can include a plurality of nodes. Generally, one or more nodes of the blockchain belong to one participant. Generally, the more participants in a blockchain network, the more authoritative the participants are, the more trustworthy the blockchain network is. Here, a blockchain network formed by a plurality of participants is referred to as a blockchain platform. The blockchain platform can help verify the identity of the financial institution.

In order to use the distributed digital identity service provided by the blockchain platform, the financial institution can register its identity in the blockchain platform. For example, the financial institution can create a pair of public and private keys, secretly store the private key, and can create a distributed digital identity (also referred to as a decentralized identifier, DID). The financial institution can create the DID by itself, or can request a decentralized identity service (DIS) system to create the DID. The DIS is a blockchain-based identity management solution that provides functions such as creating, verifying, and managing digital identities, so as to manage and protect entity data under regulations, ensure authenticity and efficiency of information flow, and solve problems such as cross-institution identity authentication and data cooperation. The DIS system can be connected to the blockchain platform. A DID can be created for the financial institution by using the DIS system, the DID and the public key are sent to the blockchain platform for storage, and the created DID is further returned to the financial institution. The public key can be included in DIDdoc, which can be stored in the blockchain platform. The DIS can create the DID for the financial institution based on the public key sent by the financial institution. For example, the DID is created after the public key of the financial institution is calculated by using the hash function, or can be created based on other information of the financial institution (which can include or not include the public key). The latter case may need the financial institution to provide information other than the public key. Afterward, the financial institution can provide a verification function to prove to other parties that it is the financial institution. For a specific example, reference can be made to FIG. 4. As shown in FIG. 4, the sales agency can be directly connected to the financial institution. In addition, both the sales agency and the financial institution can be connected to the DIS system, and all the sales agency, the financial institution, and the DIS system can be connected to the blockchain system.

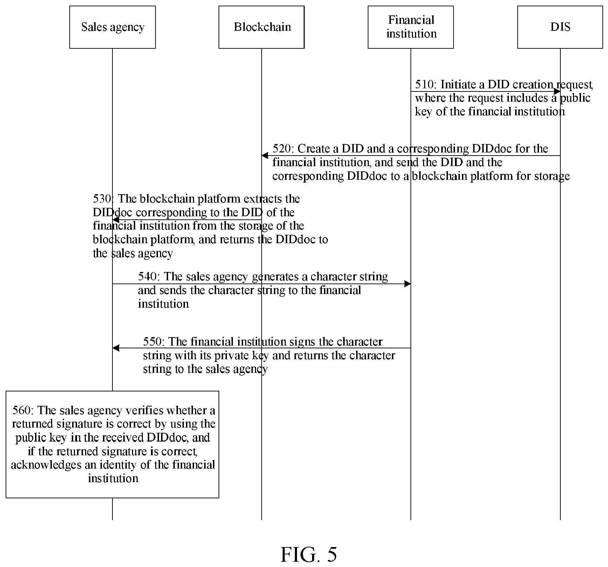

FIG. 5 is a flowchart of providing a verification function by a financial institution, according to some embodiments of the present specification. As shown in FIG. 5, the procedure can include the following steps:
Step 510: The financial institution initiates a DID creation request to a DIS, where the request includes a public key of the financial institution.
Step 520: In response to the creation request, the DIS creates a DID and a corresponding DIDdoc for the financial institution, and sends the DID and the corresponding DIDdoc to a blockchain platform for storage, where the DIDdoc includes the public key of the financial institution.
Step 530: The blockchain platform receives a verification request sent by a sales agency, where the verification request includes the DID of the financial institution; and the blockchain platform extracts the DIDdoc corresponding to the DID from the storage of the blockchain platform, and returns the DIDdoc to the sales agency.
Step 540: The sales agency generates a character string and sends the character string to the financial institution.
Step 550: The financial institution signs the character string with its private key and returns the character string to the sales agency.
Step 560: The sales agency verifies whether a returned signature is correct by using the public key in the previously received DIDdoc, and if the returned signature is correct, acknowledges the identity of the financial institution.

After the sales agency acknowledges the identity of the financial institution in the previously-mentioned method, as described above, the sales agency can send the user ID of the user to the financial institution. Clearly, there is no strict sequence between steps 530 and 540 and step 550.

In addition, after obtaining the basic data of the user, the sales agency can further perform KYC verification based on the basic data to obtain a verification result, where the verification result can include, for example, the user ID and the corresponding basic data. For example, for an individual user, verification specifically includes:
whether the name format is correct, for example, whether the name is composed of 2-5 Chinese characters;
whether the gender format is correct, such as male or female;
whether the mobile phone number is correct, such as 11 digits, and begins with fields such as 13, 15, 17, 18, and 19;
whether the contact address is correct, for example, whether the contact address is a string of words containing the province/autonomous region/municipality to the street doorplate number; etc.

As such, a KYC verification result can be obtained.

Step 320: The financial institution sends a data sharing request to the sales agency, where the data sharing request includes the user ID corresponding to user basic data that is expected to be shared.

The financial institution can send the data sharing request to the sales agency by using a privacy computing unit. Such a data sharing request can be encrypted, thereby ensuring security in a data transmission process. In addition, the financial institution alternatively does not use the privacy computing unit to send the data sharing request to the sales agency, for example, the financial institution directly sends the data sharing request to the sales agency. Specifically, for example, the financial institution can encrypt the user ID in the data sharing request to be transmitted by using a public key of the sales agency. As such, only the sales agency can decrypt the user ID in the data sharing request, because only the sales agency has a private key corresponding to the public key. The financial institution can also sign the sent data sharing request by using the private key of the financial institution. Correspondingly, the recipient (for example, the sales agency here) can verify the signature by using the public key of the financial institution, so the recipient can acknowledge that the received data sharing request is sent by the financial institution, and the received content is complete and not tampered with. Similarly, before sending the data sharing request to the sales agency, the financial institution can further acknowledge an identity of the sales agency.

In a case that the financial institution sends the data sharing request to the sales agency by using the privacy computing unit, the financial institution can send the data sharing request to the sales agency in a method of initiating a transaction of invoking a contract, and then the privacy computing unit sends the data sharing request to the sales agency.

The blockchain technology supports the user to create and invoke some complex logic in the blockchain network since Ethereum, which is one of the biggest advances of Ethereum compared with the bitcoin technology. An Ethereum virtual machine (EVM) is the core of Ethereum, which is a programmable blockchain, and each Ethereum node can run the EVM. The EVM is a Turing-complete virtual machine, through which various complex logics can be implemented. A user can deploy and invoke a smart contract by using the EVM in Ethereum. In the deployment phase, the user can send a transaction for creating a smart contract to Ethereum. The data field of the transaction can include a code (such as a bytecode) of the smart contract. The to field of the transaction is null. After diffusion and consensus of the transaction, each node in the Ethereum network can execute the transaction by using the EVM, and generate a corresponding contract instance, so as to complete deployment of the smart contract. In this case, the blockchain can have a contract account corresponding to the smart contract, and the contract account has a specific contract address. In the invoking phase, a user (which can be the same or different from the user deploying the smart contract) sends a transaction used to invoke a smart contract to the Ethereum network, where the from field of the transaction is an address of an external account corresponding to the user, the to field is a contract address of the smart contract that needs to be invoked, and the data field includes a method and a parameter for invoking the smart contract. After consensus is reached between the nodes by using the consensus mechanism, the smart contract invoked as declared by the above transaction is independently executed on each node of the Ethereum network under regulation, and all execution records and data are stored in the blockchain. Therefore, after the transaction is completed, transaction records that cannot be tampered with and will not be lost are stored in the blockchain. With development of blockchain technologies, in addition to the EVM, many other types of virtual machines, such as WebAssembly (WASM) virtual machines, are generated.

Each blockchain node can create and invoke a smart contract by using a virtual machine. It is a challenge for privacy protection to store transactions that include smart contracts and execution results of transactions in a blockchain ledger, or to store all ledgers on each full node in the blockchain. Privacy protection can be implemented by using a plurality of technologies, such as cryptography technologies (such as homomorphic encryption or zero-knowledge proof), hardware privacy technologies, and network isolation technologies. The hardware privacy protection technologies typically includes a trusted execution environment (TEE).

For example, the blockchain nodes can implement a secure execution environment for blockchain transactions by using the TEE. The TEE is a trusted execution environment that is based on a secure extension of CPU hardware and fully isolated from the outside. Currently, the industry attaches great importance to the TEE solution. Almost all mainstream chips and software alliances have their own TEE solutions, such as a trusted platform module (TPM) in a software aspect and Intel Software Guard Extensions (SGX), ARM Trustzone, and AMD Platform Security Processor (PSP) in a hardware aspect. The TEE can function as a hardware black box. Codes and data executed in the TEE cannot be peeped even at an operating system level, and can be operated only by using an interface predefined in the codes. In terms of efficiency, because of the black box nature of the TEE, an operation in the TEE is performed on plaintext data instead of a complex cryptographic operation in homomorphic encryption, and efficiency of a calculation process is hardly lost. Therefore, by deploying the TEE environment on the blockchain node, privacy requirements in the blockchain scenario can be met to a great extent while a performance loss is relatively small.

Intel SGX (SGX for short) technology is used as an example. The blockchain node can create an enclave based on the SGX technology as a TEE for executing a blockchain transaction. The blockchain node can allocate a part of enclave page cache in a memory by using a processor instruction newly added to a CPU, so as to retain the previously-mentioned enclave. A memory area corresponding to the previously-mentioned EPC is encrypted by a memory encryption engine (MEE) in the CPU, content (codes and data in the enclave) in the memory area can be decrypted only in the CPU core, and keys used for encryption and decryption are generated and stored in the CPU only when the EPC starts. It can be understood that a security boundary of the enclave includes only itself and the CPU, neither privileged nor unprivileged software can access the enclave, and even an operating system administrator and a virtual machine monitor (VMM, or referred to as a hypervisor) is unable to affect the codes and data in the enclave. Therefore, the enclave has very high security. In addition, with the previously-mentioned security guarantee, the CPU can process a blockchain transaction in a plaintext form in the enclave, and has very high operation efficiency, so both data security and calculation efficiency are ensured. However, data that enters or exits the TEE can be encrypted, so as to ensure data privacy.

In the embodiments of the present specification, the blockchain node can receive a data sharing request. Specifically, the data sharing request can be received by a privacy computing unit in the blockchain node, and the data sharing request can include a user ID corresponding to the encrypted user basic data that is expected to be shared. As described above, the privacy computing unit in the blockchain node can be, for example, a TEE created by the blockchain node based on the SGX technology, so as to be used for executing the blockchain transaction in a trusted and secret way. A virtual machine can be run in the TEE, so a contract is executed by using the virtual machine. As such, for an encrypted transaction for invoking a contract that is sent to the privacy computing unit of the blockchain node, the privacy computing unit can decrypt and execute the encrypted transaction in the virtual machine loaded in the privacy computing unit, and can encrypt and output an execution result. The remote attestation technology in SGX can prove that it is legitimate SGX, and programs executed therein (e.g., virtual machine codes) are consistent with expectations. The invoked contract, as described above, can be deployed on the blockchain in advance. The deployed contract, through codes therein, can initiate an access request to data outside the blockchain during execution. Specifically, the data sharing request can be transmitted by the TEE in the blockchain node to the off-chain sales agency by using an oracle mechanism. As such, the financial institution can send the data sharing request to the privacy computing unit by initiating a transaction for invoking a contract, and then the privacy computing unit sends the data sharing request to the sales agency.

Each blockchain node creates and invokes a smart contract by using a virtual machine, which consumes relatively more resources. Relative to using the TEE technology to protect privacy on each node in the blockchain network, a privacy computing node (that is, an off-chain privacy computing node, also referred to as a "privacy computing unit" in the embodiments of the present disclosure) can be deployed outside the blockchain network (or referred to as "off-chain"), so computing operations that originally need to be performed on all the blockchain nodes are transferred to the off-chain privacy computing node for execution. Based on a verifiable computation technology, it can be proven that the previously-mentioned computing results are actually performed as expected in the TEE, thereby ensuring reliability while reducing on-chain resource consumption.

An off-chain TEE created on the off-chain privacy computing node is similar to the on-chain TEE created on the blockchain node, and can be a TEE implemented based on CPU hardware and fully isolated from the outside. After creating the off-chain TEE, the off-chain privacy computing node can implement a deployment operation on an off-chain contract and an operation of invoking the contract after the deployment by using the off-chain TEE, and ensure data security in the operation process.

Before being used, the privacy computing node can prove to a user that the privacy computing node is trustworthy. The process of proving itself trustworthy may involve a remote attestation report. The processes that the on-chain and off-chain privacy computing nodes prove themselves trustworthy are similar. Using the off-chain privacy computing node as an example, a remote attestation report is generated in a remote attestation process for the off-chain TEE on the off-chain privacy computing node. The remote attestation report can be generated after an authoritative authentication server verifies self-recommendation information generated by the off-chain privacy computing node. The self-recommendation information is related to the off-chain TEE created on the off-chain privacy computing node. The off-chain privacy computing node generates the self-recommendation information related to the off-chain TEE, and after the authoritative authentication server verifies the self-recommendation information, the remote attestation report is generated, so the remote attestation report can be used to indicate that the off-chain TEE on the off-chain privacy computing node is trustworthy.

For example, when sending the data sharing request to the sales agency by using the privacy computing unit off the blockchain, the financial institution can first verify whether the privacy computing unit is trustworthy. Specifically, the financial institution can challenge the off-chain privacy computing node, and receive the remote attestation report returned by the off-chain privacy computing node. For example, the financial institution can initiate an off-chain challenge to the off-chain privacy computing node, that is, the process of initiating the challenge can be independent of the blockchain network, so a consensus process between the blockchain nodes can be skipped and on-chain and off-chain interoperability can be reduced. Therefore, the challenge of the financial institution to the off-chain privacy computing node has higher operational efficiency. For another example, the financial institution can use an on-chain challenge, for example, the financial institution can submit a challenge transaction to the blockchain node. Challenge information contained in the challenge transaction can be transmitted by the blockchain node to the off-chain privacy computing node by using the oracle mechanism, and the challenge information is used to challenge the off-chain privacy computing node. Regardless of the previously-mentioned on-chain challenge or the off-chain challenge, after obtaining the remote attestation report, a challenger (such as the financial institution) can verify a signature of the remote attestation report based on a public key of the authoritative authentication server, and if the verification succeeds, can acknowledge that the off-chain privacy computing node is trustworthy.

The off-chain privacy computing platform can store a pair of public and private keys in the TEE. The public key can be sent to the counterpart in a process such as a remote attestation process, and the private key is properly stored in the TEE. When it is determined, based on the remote attestation report, that the off-chain privacy computing node is trustworthy, the financial institution can encrypt and transmit a bytecode of the off-chain contract to the off-chain privacy computing node, and the off-chain privacy computing node obtains the bytecode through decryption in the off-chain trusted execution environment and deploys the bytecode. The previously-mentioned encryption can use the public key. In the previously-mentioned process, after a contract is deployed on the off-chain privacy computing node, the contract can be stored, and a hash value of the contract is calculated. The hash value of the contract can be fed back to the deployer of the contract. The deployer can locally generate a hash value for the deployed contract. Therefore, the deployer can compare whether a hash value of the deployed contract is the same as the local contract hash value. If they are the same, it indicates that the contract deployed on the off-chain privacy computing node is a contract deployed by the deployer. Content sent from the off-chain privacy computing node can be signed by using a private key stored in the TEE, so as to prove that the content is a result of execution by the TEE. Actually, a plurality of smart contracts can be deployed in the TEE, and the TEE can generate a separate pair of public and private keys for each smart contract. Therefore, each deployed smart contract can have an ID (for example, a public key corresponding to the smart contract or a character string generated based on the public key), and a result of execution of each smart contract can also be signed by using a private key that is properly stored in the TEE and corresponding to the smart contract. As such, it can be proved that a result is a result of execution of a specific contract in the off-chain privacy computing node. As such, execution results of different contracts can be signed by different private keys. Only a corresponding public key can verify the signature, or if a corresponding public key cannot verify the signature, it cannot be proved that the result is an execution result of a corresponding contract. Therefore, it is equivalent to that an identity is assigned to the contract deployed in the off-chain privacy computing node by using a pair of public and private keys. The previous description uses the off-chain privacy contract as an example. The on-chain privacy contract is also similar, and can also have an identity, that is, have a pair of public and private keys.

Subsequently, the off-chain privacy computing node can invoke the deployed off-chain contract. Specifically, when the deployed off-chain contract is invoked, a bytecode of the deployed contract can be loaded and executed in the off-chain trusted execution environment, and an execution result can be fed back to an invoker of the contract, or fed back to a recipient specified in the contract or a recipient specified in a transaction for invoking the contract, or fed back to the blockchain node by using the oracle mechanism. The execution result fed back to the blockchain node by using the oracle mechanism can be further fed back to the recipient specified in the on-chain contract or to the recipient specified in the transaction for invoking the on-chain contract via the setting of the on-chain contract.

In addition, the execution result of the off-chain privacy computing node can be output after being encrypted by using a key. For example, in an asymmetric encryption method, a public key used for encryption can be a public key in a pair of public and private keys negotiated in the previously-mentioned challenge process, or can be sent by a challenger to the off-chain privacy computing node after being generated by using the previously-mentioned DIS service. The challenger here can be the financial institution in the embodiments of the present specification, or can be the sales agency. Therefore, in the previously-mentioned method, it can be ensured that all data entering or exiting the off-chain privacy computing node is encrypted, so as to ensure security in a data transmission process. Similarly, data entering the off-chain privacy computing node can be signed by a sender by using a key of the sender. The principles in the subsequent similar steps are the same.

As such, by using a first smart contract deployed by the privacy computing unit, an invoking request sent by the financial institution can be received, and the data sharing request is sent to the sales agency in response to the invoking request. The data sharing request is signed by the privacy computing unit/the first smart contract, and correspondingly, the sales agency can verify the signature by using the public key of the privacy computing unit/the first smart contract.

Step 330: The privacy computing unit obtains, from the sales agency, the encrypted user basic data corresponding to the user ID, and decrypts the encrypted user basic data, so as to perform matching on the user basic data.

After the previously-mentioned step 320, the sales agency can locally search for the user basic data corresponding to the user ID in the sent data sharing request. Further, the privacy computing unit can obtain, from the sales agency, the encrypted user basic data corresponding to the user ID, and decrypt the encrypted user basic data.

Specifically, the sales agency can initiate a transaction for invoking a deployed second smart contract to the privacy computing unit. Parameters in the transaction can include the user ID and the corresponding user basic data. The user basic data can be encrypted. As described above, an encryption key can use a public key of the second smart contract. Further, the privacy computing unit can obtain the encrypted user basic data corresponding to the user ID and decrypt the encrypted user basic data, so as to execute the second smart contract based on an input parameter, and perform matching on the decrypted user basic data. As described above, the input user ID can also be encrypted. Correspondingly, the second smart contract can also be decrypted to obtain a plaintext of the user ID.

To improve security in a data transmission process, similar to the previous description, before initiating a transaction for invoking the deployed second smart contract to the privacy computing unit, the sales agency can challenge the privacy computing unit, so it can be determined that the identity of the privacy computing unit is trustworthy. Or the second smart contract can create a DID by using the previously-mentioned DIS system, and the DIS system can send the DID and the public key of the second smart contract to the blockchain platform for storage. Most public keys can be included in a DIDdoc, which can be stored in the blockchain platform. The DIS creates the DID for the financial institution based on the public key sent by the second smart contract. For example, the DID is created after the public key of the financial institution is calculated by using the hash function, or can be created based on other information of the second smart contract (which can include or not include the public key). The latter case may need the second smart contract to provide information other than the public key. Then, the second smart contract can provide a verification function, so as to prove to another party that the second smart contract is a second smart contract. A specific process is similar to the previously-mentioned process, and details are not described. In addition, it can be understood that the second smart contract and the first smart contract can be the same contract, and the contract can include a first function used to implement the function mentioned in step 310 and a second function used to implement the functions mentioned in step 320 and step 330. As such, pairs of public and private keys of the first smart contract and the second smart contract can be the same, or can be equivalent to the pair of public and private keys of the privacy computing unit when the privacy computing unit includes only one smart contract.

After the second smart contract obtains the user basic data, the second smart contract can be executed, so as to perform KYC verification based on the basic data, for example, perform matching on the decrypted user data, so as to obtain a verification result. For example, for an individual user, verification is specifically:
whether the name format is correct, for example, whether the name is composed of 2-5 Chinese characters;
whether the gender format is correct, such as male or female;
whether the mobile phone number is correct, such as 11 digits, and begins with fields such as 13, 15, 17, 18, and 19;
whether the contact address is correct, for example, whether the contact address is a string of words containing the province/autonomous region/municipality to the street doorplate number; etc.

As such, a KYC verification result can be obtained. The verification result is specifically, for example, {user ID, KYC result}. The KYC result is, for example, passed or failed.

Step 340: The privacy computing platform sends the matching result to the financial institution.

As described above, the matching result is, for example, {user ID, KYC result}, and the KYC result is, for example, passed or failed. That the privacy computing platform sends the matching result to the financial institution includes directly sending the matching result to the financial institution, or can include sending the matching result to a specified storage service medium, which is subsequently pulled by the financial institution from the storage service medium.

In addition, the privacy computing unit can further send a proof of the matching result to the blockchain. The proof of the matching result can include a verifiable claim (VC) signed by the privacy computing unit. The VC is also an important application in the DID. The VC can be stored on the blockchain platform. For example, content of the VC includes that user basic data corresponding to a user ID/some user IDs has been matched by the privacy computing unit based on a predetermined rule, and is signed by the privacy computing unit; or includes a hash value of the matching result, which is signed by the privacy computing unit. After a process similar to step 510 to step 560, the privacy computing unit can store its DIDdoc on the blockchain.

When examining the KYC verification result on the user by the financial institution, the regulatory organization can verify the VC by using the blockchain in addition to obtaining the matching result from the financial institution. Specifically, when obtaining the public key in the DIDdoc of the privacy computing unit from the blockchain, and verifying the matching result of the user ID of the financial institution, the regulatory organization can further verify the signature of the VC by using the public key of the privacy computing unit, so as to acknowledge that the VC is issued by the privacy computing unit and is complete, that is, the VC is not tampered with. As such, authenticity acknowledgement of the KYC verification result provided by the financial institution can be improved based on a non-tampering feature of the blockchain platform and trustworthiness of a signing institution. The trustworthiness of the signing institution, that is, the trustworthiness of the privacy computing unit/second smart contract, can be implemented by auditing the identity of the privacy computing unit and the contract code deployed therein. The identity of the privacy computing unit is audited, for example, the previously-mentioned challenge initiation process can verify that the identity of the privacy computing unit is trustworthy.

As such, by using the solution in the previously-mentioned embodiment, an institution that originally does not have the capability to perform anti-money laundering work can be empowered, so such an institution can have a KYC result of a user who purchases a financial product of the institution, thereby satisfying a specified anti-money laundering audit obligation, and improving an overall KYC verification capability of the industry.

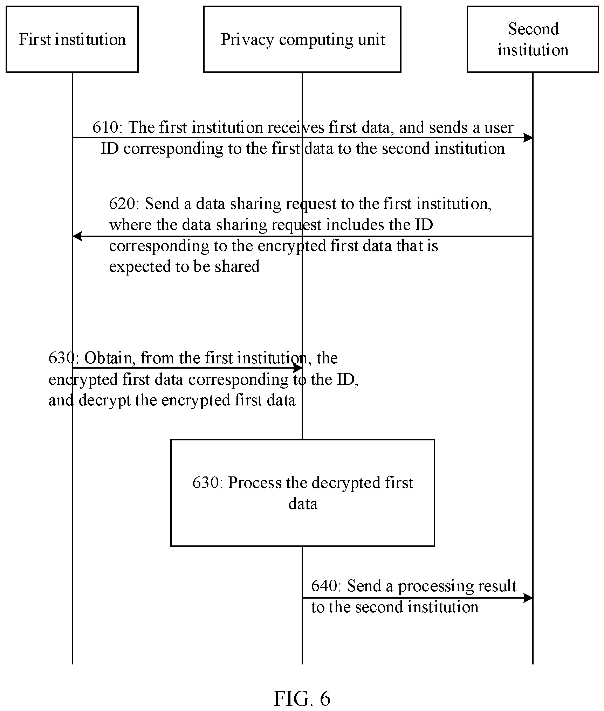

Referring back to FIG. 1, embodiments of an information sharing method provided in the present specification can be implemented by roles in FIG. 1. A specific procedure can be shown in FIG. 6, including the following steps:
Step 610: A first institution receives first data, and sends a user ID corresponding to the first data to a second institution.

For example, a user directly transmits data to the first institution, and the first institution can receive the first data provided by the user for data verification. The first data may be relatively sensitive and is not expected to be output outside the first institution.

The user ID can be, for example, an account of the user at the first registration, or an account allocated to the user by the system of the first institution when the user initiates a service operation in the first institution. Such an account can be, for example, a character string. For example, the first data is some information corresponding to the ID. As described above, the information may be relatively sensitive.

The user ID can be a digest value obtained after hash processing is performed on some or all of the first data. Because hash calculation has a unidirectional feature and a feature of hiding original information, and a good hash function has an anti-collision capability, that is, there is a very high probability that hash values obtained by different inputs are also different, a hash calculation result (or referred to as a digest value) can be used as an ID.

Similarly, hash calculation can be performed after a group of information in the first data is concatenated, to obtain a digest value as an ID. In addition, a salting operation can be performed in hash calculation.

The first institution can prompt the user to provide the first data when the user registers, or can request the user to provide the first data when the user initiates a service request on the first institution platform.

The first institution can send the ID to the second institution. Specifically, the first institution can directly send the user ID to the second institution, for example, send a digest value obtained through hash processing to the second institution, or encrypt the user ID to improve data transmission security, and send the user ID to the second institution. For the encrypted sending to the second institution, the user ID can be encrypted and sent to the second institution by the first institution in a symmetric or asymmetric encryption method. If symmetric encryption is used, that is, a case that an encryption key and a decryption key are the same key, the key can be obtained through a key negotiation process between the first institution and the second institution. If asymmetric encryption is used, that is, an encryption key and a decryption key are two different but corresponding keys, one is a public key for encryption, and the another is a private key for decryption, generally, the first institution can encrypt the user ID in the verification result by using a public key of the second institution, and then send the user ID to the second institution, so the second institution decrypts the ID by using a corresponding private key.

To further improve security of data transmission, that is, although encrypted data is transmitted, an incorrect recipient is not expected to receive the data. Therefore, before sending the user ID to the second institution, the first institution can first acknowledge an identity of the counterpart, which is the second institution. There are several methods for determining the identity of the counterpart. An implementation of using a distributed digital identity technology combined with a blockchain is listed here.

In order to use the distributed digital identity service provided by the blockchain platform, the second institution can register its identity in the blockchain platform. For example, the second institution can create a pair of public and private keys, the private key is stored securely, and a DID can be created. The second institution can create the DID, or can request the DIS system to create the DID. A DID can be created for the second institution by using the DIS system, the DID and the public key are sent to the blockchain platform for storage, and the created DID is further returned to the second institution. Most public keys can be included in a DIDdoc, which can be stored in the blockchain platform. The DIS can create the DID for the second institution based on the public key sent by the second institution. For example, the DID is created after the public key of the second institution is calculated by using the hash function, or can be created based on other information of the second institution (which can include or not include the public key). The latter case may need the second institution to provide information other than the public key. Afterward, the second institution can provide a verification function to prove to other parties that it is the second institution. A specific example can include the following steps:
Step 710: The second institution initiates a DID creation request to a DIS, where the request includes a public key of the second institution.
Step 720: In response to the creation request, the DIS creates a DID and a corresponding DIDdoc for the second institution, and sends the DID and the corresponding DIDdoc to a blockchain platform for storage, where the DIDdoc includes the public key of the second institution.
Step 730: The blockchain platform receives a verification request sent by the first institution, where the verification request includes the DID of the second institution; and the blockchain platform extracts the DIDdoc corresponding to the DID from the storage of the blockchain platform, and returns the DIDdoc to the first institution.
Step 740: The first institution generates a character string and sends the character string to the second institution.
Step 750: The second institution signs the character string with its private key and returns the character string to the first institution.
Step 760: The first institution verifies whether a returned signature is correct by using the public key in the previously received DIDdoc, and if the returned signature is correct, acknowledges the identity of the second institution.

After the first institution determines the identity of the second institution in the previously-mentioned method, as described above, the first institution can send the ID to the second institution. Clearly, there is no strict sequence between steps 730 and 740 and step 750.

In addition, after obtaining the first data, the first institution can further perform verification on the first data to obtain a verification result, where the verification result can include, for example, the user ID and the corresponding first data.

Step 620: The second institution sends a data sharing request to the first institution, where the data sharing request includes the user ID corresponding to the encrypted first data that is expected to be shared.

The second institution can send the data sharing request to the first institution by using the privacy computing unit. Such a data sharing request can be encrypted, thereby ensuring security in a data transmission process.

In addition, the second institution alternatively does not use the privacy computing unit to send the data sharing request to the first institution, for example, the second institution directly sends the data sharing request to the first institution. Specifically, for example, the second institution can encrypt the user ID in the data sharing request to be transmitted by using a public key of the first institution. As such, only the first institution can decrypt the user ID in the data sharing request, because only the first institution has a private key corresponding to the public key. The second institution can also sign the sent data sharing request by using the private key of the second institution. Correspondingly, the recipient (for example, the first institution here) can verify the signature by using the public key of the second institution, so the recipient can acknowledge that the received data sharing request is sent by the second institution, and the received content is not tampered with. Similarly, before sending the data sharing request to the first institution, the second institution can further acknowledge the identity of the first institution, for example, verify the identity by using a process similar to the previously-mentioned step 710 to step 760, and details are not described again.

In a case that the second institution sends the data sharing request to the first institution by using the privacy computing unit, the second institution can send the data sharing request to the privacy computing unit in a method of initiating a transaction for invoking a contract, and then the privacy computing unit sends the data sharing request to the first institution.

The blockchain technology supports the user to create and invoke some complex logic in the blockchain network since Ethereum, which is one of the biggest advances of Ethereum compared with the bitcoin technology. An Ethereum virtual machine (EVM) is the core of Ethereum, which is a programmable blockchain, and each Ethereum node can run the EVM. The EVM is a Turing-complete virtual machine, through which various complex logics can be implemented. A user can deploy and invoke a smart contract by using the EVM in Ethereum. In the deployment phase, the user can send a transaction for creating a smart contract to Ethereum. The data field of the transaction can include a code (such as a bytecode) of the smart contract. The to field of the transaction is null. After diffusion and consensus of the transaction, each node in the Ethereum network can execute the transaction by using the EVM, and generate a corresponding contract instance, so as to complete deployment of the smart contract. In this case, the blockchain can have a contract account corresponding to the smart contract, and the contract account has a specific contract address. In the invoking phase, a user (which can be the same or different from the user deploying the smart contract) sends a transaction used to invoke a smart contract to the Ethereum network, where the from field of the transaction is an address of an external account corresponding to the user, the to field is a contract address of the smart contract that needs to be invoked, and the data field includes a method and a parameter for invoking the smart contract. After consensus is reached between the nodes by using the consensus mechanism, the smart contract invoked as declared by the above transaction is independently executed on each node of the Ethereum network under regulation, and all execution records and data are stored in the blockchain. Therefore, after the transaction is completed, transaction records that cannot be tampered with and will not be lost are stored in the blockchain. With development of blockchain technologies, in addition to the EVM, many other types of virtual machines, such as WebAssembly (WASM) virtual machines, are generated.

Each blockchain node can create and invoke a smart contract by using a virtual machine. It is a challenge for privacy protection to store transactions that include smart contracts and execution results of transactions in a blockchain ledger, that is, to store all ledgers on each full node in the blockchain. Privacy protection can be implemented by using a plurality of technologies, such as cryptography technologies (such as homomorphic encryption or zero-knowledge proof), hardware privacy technologies, and network isolation technologies. The hardware privacy protection technologies typically includes a trusted execution environment (TEE).

For example, the blockchain nodes can implement a secure execution environment for blockchain transactions by using the TEE. The TEE is a trusted execution environment that is based on a secure extension of CPU hardware and fully isolated from the outside. Currently, the industry attaches great importance to the TEE solution. Almost all mainstream chips and software alliances have their own TEE solutions, such as a trusted platform module (TPM) in a software aspect and Intel Software Guard Extensions (SGX), ARM Trustzone, and AMD Platform Security Processor (PSP) in a hardware aspect. The TEE can function as a hardware black box. Codes and data executed in the TEE cannot be peeped even at an operating system level, and can be operated only by using an interface predefined in the codes. In terms of efficiency, because of the black box nature of the TEE, an operation in the TEE is performed on plaintext data instead of a complex cryptographic operation in homomorphic encryption, and efficiency of a calculation process is not lost. Therefore, by deploying the TEE environment on the blockchain node, privacy requirements in the blockchain scenario can be met to a great extent while a performance loss is relatively small.

Intel SGX (SGX for short) technology is used as an example. The blockchain node can create an enclave based on the SGX technology as a TEE for executing a blockchain transaction. The blockchain node can allocate a part of enclave page cache in a memory by using a processor instruction newly added to a CPU, so as to retain the previously-mentioned enclave. A memory area corresponding to the EPC is encrypted by a memory encryption engine (MEE) in the CPU, content (codes and data in the enclave) in the memory area can be decrypted only in the CPU core, and keys used for encryption and decryption are generated and stored in the CPU only when the EPC starts. It can be understood that a security boundary of the enclave includes only itself and the CPU, neither privileged nor unprivileged software can access the enclave, and even an operating system administrator and a virtual machine monitor (VMM, or referred to as a hypervisor) is unable to affect the codes and data in the enclave. Therefore, the enclave has very high security. In addition, with the previously-mentioned security guarantee, the CPU can process a blockchain transaction in a plaintext form in the enclave, and has very high operation efficiency, so both data security and calculation efficiency are ensured. However, data that enters or exits the TEE can be encrypted, so as to ensure data privacy.

In the embodiments of the present specification, the blockchain node can receive a data sharing request. Specifically, the data sharing request can be received by a privacy computing unit in the blockchain node, and the data sharing request can include a user ID corresponding to the encrypted first data that is expected to be shared. As described above, the privacy computing unit in the blockchain node can be, for example, a TEE created by the blockchain node based on the SGX technology, so as to be used for executing the blockchain transaction in a trusted and secret way. A virtual machine can be run in the TEE, so a contract is executed by using the virtual machine. As such, for an encrypted transaction for invoking a contract that is sent to the privacy computing unit of the blockchain node, the privacy computing unit can decrypt and execute the encrypted transaction in the virtual machine loaded in the privacy computing unit, and can encrypt and output an execution result. The remote attestation technology in SGX can prove that it is legitimate SGX, and programs executed therein (e.g., virtual machine codes) are consistent with expectations. The invoked contract, as described above, can be deployed on the blockchain in advance. The deployed contract, through codes therein, can initiate an access request to data outside the blockchain during execution. Specifically, the data sharing request can be transmitted by the TEE in the blockchain node to the off-chain first institution by using an oracle mechanism. As such, the second institution can send the data sharing request to the privacy computing unit by initiating a transaction for invoking a contract, and then the privacy computing unit sends the data sharing request to the first institution.

Each blockchain node creates and invokes a smart contract by using a virtual machine, which consumes relatively more resources. Relative to using the TEE technology to protect privacy on each node in the blockchain network, a privacy computing node (that is, an off-chain privacy computing node) can be deployed outside the blockchain network (or referred to as "off-chain"), so computing operations that originally need to be performed on all the blockchain nodes are transferred to the off-chain privacy computing node for execution. As such, the user can go to a privacy computing node off the blockchain (or an off-chain privacy computing node, also referred to as a "privacy computing unit" in the embodiments of the present disclosure). Based on a verifiable computation technology, it is proven that the previously-mentioned computing results are actually performed as expected in the TEE, thereby ensuring reliability while reducing on-chain resource consumption.

An off-chain TEE created on the off-chain privacy computing node is similar to the on-chain TEE created on the blockchain node, and can be a TEE implemented based on CPU hardware and fully isolated from the outside. By creating the off-chain TEE, the off-chain privacy computing node can implement a deployment operation on an off-chain contract and operations of invoking and executing the contract after the deployment by using the off-chain TEE, and ensure data security and privacy protection in the operation process.

This is similar to that before being used, the privacy computing node can prove to a user that the privacy computing node is trustworthy. The process of proving itself trustworthy may involve a remote attestation report. The processes that the on-chain and off-chain privacy computing nodes prove themselves trustworthy are similar. Using the off-chain privacy computing node as an example, a remote attestation report is generated in a remote attestation process for the off-chain TEE on the off-chain privacy computing node. The remote attestation report can be generated after an authentication server verifies self-recommendation information generated by the off-chain privacy computing node. The self-recommendation information is related to the off-chain TEE created on the off-chain privacy computing node. The off-chain privacy computing node generates the self-recommendation information related to the off-chain TEE, and after the authentication server verifies the self-recommendation information, the remote attestation report is generated, so the remote attestation report can be used to indicate that the off-chain TEE on the off-chain privacy computing node is trustworthy.

For example, when sending the data sharing request to the first institution by using the privacy computing unit off the blockchain, the second institution can first verify whether the privacy computing unit is trustworthy. Specifically, the second institution can challenge the off-chain privacy computing node, and receive the remote attestation report returned by the off-chain privacy computing node. For example, the second institution can initiate an off-chain challenge to the off-chain privacy computing node, that is, the process of initiating the challenge can be independent of the blockchain network, so a consensus process between the blockchain nodes can be skipped and on-chain and off-chain interoperability can be reduced. Therefore, the challenge of the second institution to the off-chain privacy computing node has higher operational efficiency. For another example, the second institution can use an on-chain challenge, for example, the second institution can submit a challenge transaction to the blockchain node. Challenge information contained in the challenge transaction can be transmitted by the blockchain node to the off-chain privacy computing node by using the oracle mechanism, and the challenge information is used to challenge the off-chain privacy computing node. Regardless of the previously-mentioned on-chain challenge or the off-chain challenge, after obtaining the remote attestation report, a challenger (such as the second institution) can verify a signature of the remote attestation report based on a public key of the authoritative authentication server, and if the verification succeeds, can acknowledge that the off-chain privacy computing node is trustworthy.

The off-chain privacy computing platform can store a pair of public and private keys in the TEE. The public key can be sent to the counterpart in a process such as a remote attestation process, and the private key is properly stored in the TEE. When it is determined, based on the remote attestation report, that the off-chain privacy computing node is trustworthy, the second institution can encrypt and transmit a bytecode of the off-chain contract to the off-chain privacy computing node, and the off-chain privacy computing node obtains the bytecode through decryption in the off-chain trusted execution environment and deploys the bytecode. The previously-mentioned encryption can use the public key. In the previously-mentioned process, after a contract is deployed on the off-chain privacy computing node, the contract can be stored, and a hash value of the contract is calculated. The hash value of the contract can be fed back to the deployer of the contract. The deployer can locally generate a hash value for the deployed contract. Therefore, the deployer can compare whether a hash value of the deployed contract is the same as the local contract hash value. If they are the same, it indicates that the contract deployed on the off-chain privacy computing node is a contract deployed by the deployer. Content sent from the off-chain privacy computing node can be signed by using a private key stored in the TEE, so as to prove that the content is a result of execution by the TEE. Actually, a plurality of smart contracts can be deployed in the TEE, and the TEE can generate a separate pair of public and private keys for each smart contract. Therefore, each deployed smart contract can have an ID (for example, a public key corresponding to the smart contract or a character string generated based on the public key), and a result of execution of each smart contract can also be signed by using a private key that is properly stored in the TEE and corresponding to the smart contract. As such, it can be proved that a result is a result of execution of a specific contract in the off-chain privacy computing node. As such, execution results of different contracts can be signed by different private keys. Only a corresponding public key can verify the signature, or if a corresponding public key cannot verify the signature, it cannot be proved that the result is an execution result of a corresponding contract. Therefore, it is equivalent to that an identity is assigned to the contract deployed in the off-chain privacy computing node by using a pair of public and private keys. The previous description uses the off-chain privacy contract as an example. The on-chain privacy contract is also similar, and can also have an identity, that is, have a pair of public and private keys.

Subsequently, the off-chain privacy computing node can invoke the deployed off-chain contract. Specifically, when the deployed off-chain contract is invoked, a bytecode of the deployed contract can be loaded and executed in the off-chain trusted execution environment, and an execution result can be fed back to an invoker of the contract, or fed back to a recipient specified in the contract or a recipient specified in a transaction for invoking the contract, or fed back to the blockchain node by using the oracle mechanism. The execution result fed back to the blockchain node by using the oracle mechanism can be further fed back to the recipient specified in the on-chain contract or to the recipient specified in the transaction for invoking the on-chain contract via the setting of the on-chain contract.

In addition, the execution result of the off-chain privacy computing node can be output after being encrypted by using a key. For example, in an asymmetric encryption method, a public key used for encryption can be a public key in a pair of public and private keys negotiated in the previously-mentioned challenge process, or can be sent by a challenger to the off-chain privacy computing node after being generated by using the previously-mentioned DIS service. The challenger here can be the second institution in the embodiments of the present specification, or can be the first institution. Therefore, in the previously-mentioned method, it can be ensured that all data entering or exiting the off-chain privacy computing node is encrypted, so as to ensure security in a data transmission process. Similarly, data entering the off-chain privacy computing node can be signed by a sender by using a key of the sender. The principles in the subsequent similar steps are the same.

As such, by using a first smart contract deployed by the privacy computing unit, an invoking request sent by the second institution can be received, and the data sharing request is sent to the first institution in response to the invoking request. The data sharing request is signed by the privacy computing unit/the first smart contract, and correspondingly, the first institution can verify the signature by using the public key of the privacy computing unit/the first smart contract.

Step 630: The privacy computing unit obtains, from the first institution, the encrypted first data corresponding to the user ID, and decrypts the encrypted first data, so as to process the first data to obtain a processing result.

After the previously-mentioned step 620, the first institution can locally search for the first data corresponding to the user ID in the sent data sharing request. Further, the privacy computing unit can obtain, from the first institution, the encrypted first data corresponding to the user ID, and decrypt the encrypted first data.

Specifically, the first institution can initiate a transaction for invoking a deployed second smart contract to the privacy computing unit. Parameters in the transaction can include the user ID and the corresponding first data. The first data can be encrypted. As described above, an encryption key can use a public key of the second smart contract. Further, the privacy computing unit can obtain the encrypted first data corresponding to the user ID and decrypt the encrypted first data, so as to execute the second smart contract based on an input parameter, and perform matching on the decrypted first data. As described above, the input user ID can also be encrypted. Correspondingly, the second smart contract can also be decrypted to obtain a plaintext of the user ID.

To improve security in a data transmission process, similar to the previous description, before initiating a transaction for invoking the deployed second smart contract to the privacy computing unit, the first institution can challenge the privacy computing unit, so it can be determined that the identity of the privacy computing unit is trustworthy. Or the second smart contract can create a DID by using the previously-mentioned DIS system, and the DIS system can send the DID and the public key of the second smart contract to the blockchain platform for storage. The public key can be included in DIDdoc, which can be stored in the blockchain platform. The DIS creates the DID for the second institution based on the public key sent by the second smart contract. For example, the DID is created after the public key of the second institution is calculated by using the hash function, or can be created based on other information of the second smart contract (which can include or not include the public key). The latter case may need the second smart contract to provide information other than the public key. Then, the second smart contract can provide a verification function, so as to prove to another party that the second smart contract is a second smart contract. A specific process is similar to the previously-mentioned process, and details are not described. In addition, it can be understood that the second smart contract and the first smart contract can be the same contract, and the contract can include a first function used to implement the function mentioned in step 610 and a second function used to implement the functions mentioned in step 620 and step 630. As such, pairs of public and private keys of the first smart contract and the second smart contract can be the same, or can be equivalent to the pair of public and private keys of the privacy computing unit when the privacy computing unit includes only one smart contract.

After the second smart contract obtains the first data, the second smart contract can be executed to perform processing based on the first data, for example, perform matching on the decrypted first data, so as to obtain a processing result.

Step 640: The privacy computing platform sends the processing result to the second institution.

That the privacy computing platform sends the matching result to the second institution includes directly sending the matching result to the second institution, or can include sending the matching result to a specified storage service medium, which is subsequently pulled by the second institution from the storage service medium.

In addition, the privacy computing unit can further send a proof of the matching result to the blockchain. The proof of the matching result can include a VC signed by the privacy computing unit. The VC can be stored on the blockchain platform. For example, content of the VC includes that first data corresponding to an ID/some IDs has been matched by the privacy computing unit based on a predetermined rule, and is signed by the privacy computing unit; or includes a hash value of the matching result, which is signed by the privacy computing unit. After a process similar to step 710 to step 760, the privacy computing unit can store its DIDdoc on the blockchain.

When a third institution checks the processing result of the second institution for the first data, in addition to obtaining the processing result from the second institution, the third institution can further verify the VC by using the blockchain. Specifically, when obtaining the public key in the DIDdoc of the privacy computing unit from the blockchain, and verifying the processing result of the user ID of the second institution, the third institution can further verify the signature of the VC by using the public key of the privacy computing unit, so as to acknowledge that the VC is issued by the privacy computing unit and is complete, that is, the VC is not tampered with. As such, authenticity acknowledgement of the processing result provided by the second institution can be improved based on a non-tampering feature of the blockchain platform and trustworthiness of the signature institution. The trustworthiness of the signature institution, that is, the trustworthiness of the privacy computing unit/second smart contract, can be implemented by auditing the identity of the privacy computing unit and the contract code deployed therein. The identity of the privacy computing unit is audited, for example, the previously-mentioned challenge initiation process can verify that the identity of the privacy computing unit is trustworthy.

The following describes a system corresponding to the previously-mentioned information sharing method provided in the embodiments of the present specification.

An information sharing system includes:
a sales agency, configured to: receive basic data of a user, and send a user ID of the user to a financial institution;
the financial institution, configured to send a data sharing request to the sales agency, where the data sharing request includes the user ID corresponding to user basic data that is expected to be shared;
a privacy computing unit, configured to: obtain, from the sales agency, the encrypted user basic data corresponding to the user ID, and decrypt the encrypted user basic data, so as to perform matching on the decrypted user basic data to obtain a matching result; and further configured to send the matching result to the financial institution.

The user ID includes an account registered by the user at the sales agency; or an account allocated by a system of the sales agency to the user when the user initiates a purchase operation at the sales agency.

The user ID includes a digest value obtained through hash calculation on one or more pieces of information of the user.

The user ID includes a digest value obtained through salting hash calculation on one or more pieces of information of the user.

The sending the user ID of the user to the financial institution includes: the sales agency sends the user ID to the financial institution after encrypting the user ID.

Before the sending the user ID of the user to the financial institution, the method further includes: the sales agency verifies an identity of the financial institution.

The user ID in the data sharing request is encrypted.

The data sharing request includes a signature of the financial institution.

Before the sending the data sharing request to the sales agency, the method further includes: the financial institution verifies an identity of the sales agency.

The sending the data sharing request to the sales agency includes: the financial institution directly sends the data sharing request to the sales agency; or the financial institution sends the data sharing request to the sales agency by using a privacy computing unit.

That the financial institution sends the data sharing request to the sales agency by using a privacy computing unit includes:
The financial institution sends the data sharing request to the sales agency by using a privacy computing unit on a blockchain; or the financial institution sends the data sharing request to the sales agency by using a privacy computing unit off a blockchain.

That the financial institution sends the data sharing request to the sales agency by using a privacy computing unit includes:
The financial institution sends the data sharing request to the privacy computing unit by initiating a transaction for invoking a contract, and then the privacy computing unit sends the data sharing request to the sales agency.

A first smart contract is deployed in the privacy computing unit, and the first smart contract is used to receive an invoking request sent by the financial institution, and in response to the invoking request, send the data sharing request to the sales agency.

The data sharing request is signed by the privacy computing unit, and the sales agency verifies the signature by using a public key of the privacy computing unit; or the data sharing request is signed by the first smart contract, and the sales agency verifies the signature by using a public key of the first smart contract.

The obtaining, from the sales agency, the encrypted user basic data corresponding to the user ID and decrypting the user basic data includes:
The privacy computing unit receives a transaction that is initiated by the sales agency and that invokes a second smart contract deployed at the privacy computing unit, where parameters in the transaction include the user ID and the encrypted user basic data corresponding to the user ID; and the privacy computing unit decrypts the encrypted user basic data.

The performing matching on the decrypted user basic data includes: The privacy computing unit executes the second smart contract to perform matching on the decrypted user basic data.

Before the obtaining the encrypted user basic data corresponding to the user ID from the sales agency, the method further includes: The privacy computing unit proves an identity of the privacy computing unit to the sales agency.

The privacy computing unit is further configured to send a proof of the matching result to a blockchain.

The proof of the matching result includes a verifiable claim signed by the privacy computing unit.

The privacy computing unit is configured to send, to the financial institution, a verifiable claim signed by the privacy computing unit; and the system further includes a regulatory organization, configured to verify a signature of the verifiable claim at the financial institution using a public key of the privacy computing unit.

An information sharing system includes:
a first institution, configured to: receive first data, and sending a user ID corresponding to the first data to a second institution;
the second institution, configured to send a data sharing request to the first institution, where the data sharing request includes the user ID corresponding to the first data that is expected to be shared;
a privacy computing unit, configured to: obtain, from the first institution, the encrypted first data corresponding to the user ID, and decrypt the encrypted first data, so as to process the decrypted first data to obtain a processing result; and further configured to send the processing result to the second institution.

The user ID includes an account registered by a user corresponding to the first data at the first institution; or an account allocated to the user by a system of the first institution when the user corresponding to the first data initiates a purchase operation at the first institution.

The user ID includes a digest value obtained through hash calculation on one or more pieces of information of the first data.

The user ID includes a digest value obtained through salting hash calculation on one or more pieces of information of the first data.

The sending the user ID corresponding to the first data to the second institution includes: The first institution encrypts and sends the user ID corresponding to the first data to the second institution.

Before the sending the user ID corresponding to the first data to the second institution, the method further includes: The first institution verifies an identity of the second institution.

The user ID in the data sharing request is encrypted.

The data sharing request includes a signature of the second institution.

Before the sending the data sharing request to the first institution, the method further includes: the second institution verifies an identity of the first institution.

The sending the data sharing request to the first institution includes: the second institution directly sends the data sharing request to the first institution; or the second institution sends the data sharing request to the first institution by using a privacy computing unit.

That the second institution sends the data sharing request to the first institution by using a privacy computing unit includes: The second institution, sends the data sharing request to the first institution by using a privacy computing unit on a blockchain; or the second institution sends the data sharing request to the first institution by using a privacy computing unit off a blockchain.

That the second institution sends the data sharing request to the first institution by using a privacy computing unit includes:

the second institution sends the data sharing request to the privacy computing unit by initiating a transaction for invoking a contract, and then the privacy computing unit sends the data sharing request to the first institution.

A first smart contract is deployed in the privacy computing unit, and the first smart contract is used to receive an invoking request sent by the second institution, and in response to the invoking request, send the data sharing request to the first institution.

The data sharing request is signed by the privacy computing unit, and the first institution verifies the signature by using a public key of the privacy computing unit; or the data sharing request is signed by the first smart contract, and the first institution verifies the signature by using a public key of the first smart contract.

The obtaining, from the first institution, the encrypted first data corresponding to the user ID, and decrypting the encrypted first data includes:

The privacy computing unit receives a transaction that is initiated by the first institution and that invokes a second smart contract deployed at the privacy computing unit, where parameters in the transaction include the user ID and the encrypted first data corresponding to the user ID; and the privacy computing unit decrypts the encrypted first data corresponding to the user ID.

The processing the decrypted first data includes: The privacy computing unit executes the second smart contract to process the decrypted first data.

Before the obtaining the encrypted first data corresponding to the user ID from the first institution, the method further includes: The privacy computing unit proves an identity of the privacy computing unit to the first institution.

The privacy computing unit is further configured to send a proof of the processing result to a blockchain.

The proof of the processing result includes a verifiable claim signed by the privacy computing unit.

The privacy computing unit is configured to send, to the second institution, a verifiable claim signed by the privacy computing unit; and the system further includes a third institution, configured to verify a signature of the verifiable claim at the second institution using a public key of the privacy computing unit.

In the 1990s, whether a technical improvement is a hardware improvement (for example, an improvement of a circuit structure, such as a diode, a transistor, or a switch) or a software improvement (an improvement of a method procedure) can be clearly distinguished. However, as technologies develop, current improvements of many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, the programming is mostly implemented by modifying "logic compiler" software instead of manually making an integrated circuit chip. This is similar to a software compiler used for program development and compiling. However, original code before compiling is also written in a specific programming language, which is referred to as a hardware description language (HDL). There are many HDLs, such as an Advanced Boolean Expression Language (ABEL), an Altera Hardware Description Language (AHDL), Confluence, a Cornell University Programming Language (CUPL), HDCal, a Java Hardware Description Language (JHDL), Lava, Lola, MyHDL, PALASM, and a Ruby Hardware Description Language (RHDL). Currently, a Very-High-Speed Integrated Circuit Hardware Description Language (VHDL) and Verilog are most commonly used. A person skilled in the art should also understand that a hardware circuit that implements a logical method procedure can be readily obtained once the method procedure is logically programmed by using the previously-mentioned several described hardware description languages and is programmed into an integrated circuit.

A controller can be implemented by using any appropriate method. For example, the controller can be a microprocessor or a processor, or a computer-readable medium that stores computer readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using the computer readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

The system, apparatus, module, or unit illustrated in the previously-mentioned embodiments can be implemented by using a computer chip or an entity, or can be implemented by using a product having a certain function. A typical implementation device is a computer. The computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the apparatus above is described by dividing functions into various units. Certainly, when the present specification is implemented, a function of each unit can be implemented in one or more pieces of software and/or hardware.

A person skilled in the art should understand that an embodiment of the present disclosure can be provided as a method, a system, or a computer program product. Therefore, the present disclosure can use a form of hardware only embodiments, software only embodiments, or embodiments with a combination of software and hardware. Moreover, the present disclosure can use a form of a computer program product that is implemented on one or more computer-usable storage media (including but not limited to a disk memory, a CD-ROM, an optical memory, etc.) that include computer-usable program code.

The present disclosure is described with reference to the flowcharts and/or block diagrams of the method, the device (system), and the computer program product based on the embodiments of the present disclosure. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer readable memory that can instruct the computer or the another programmable data processing device to work in a specific way, so the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so a series of operations and operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), one or more input/output interfaces, one or more network interfaces, and one or more memories.

The memory may include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computer device. Based on the definition in the present specification, the computer readable medium does not include transitory media such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

A person skilled in the art should understand that an embodiment of the present specification can be provided as a method, a system, or a computer program product. Therefore, the present specification can use a form of hardware only embodiments, software only embodiments, or embodiments with a combination of software and hardware. In addition, the present specification can use a form of a computer program product that is implemented on one or more computer-usable storage media (including but not limited to a disk memory, a CD-ROM, an optical memory, etc.) that include computer-usable program code.

The present specification can be described in the general context of computer executable instructions executed by a computer, for example, a program module. Generally, the program module includes a routine, a program, an object, a component, a data structure, etc. executing a specific task or implementing a specific abstract data type. The present specification can also be practiced in distributed computing environments. In the distributed computing environments, tasks are performed by remote processing devices connected through a communications network. In a distributed computing environment, the program module can be located in both local and remote computer storage media including storage devices.

The previously-mentioned are just some embodiments of the present specification, and are not intended to limit the present specification. A person skilled in the art can make various modifications and changes to the present specification.

## Claims

1. An information sharing method, comprising:
receiving (310), by a sales agency, user basic data of a user, and sending a user ID of the user to a financial institution;
sending (320), by the financial institution, a data sharing request to the sales agency by using a privacy computing unit, wherein the data sharing request comprises the user ID corresponding to user basic data that is expected to be shared;
obtaining (330), by the privacy computing unit from the sales agency, encrypted user basic data corresponding to the user ID, and decrypting the encrypted user basic data, so as to perform matching on the decrypted user basic data to obtain a matching result; and
sending (340), by the privacy computing unit, the matching result to the financial institution,
wherein a first smart contract is deployed in the privacy computing unit, and the first smart contract is used to receive an invoking request sent by the financial institution, and in response to the invoking request, send the data sharing request to the sales agency, and
wherein the obtaining, by the privacy computing unit from the sales agency, the encrypted user basic data corresponding to the user ID, and decrypting the encrypted user basic data comprises:
receiving, by the privacy computing unit, a transaction that is initiated by the sales agency and that invokes a second smart contract deployed at the privacy computing unit, wherein parameters in the transaction comprise the user ID and the encrypted user basic data corresponding to the user ID; and
decrypting, by the privacy computing unit, the encrypted user basic data.

2. The method according to claim 1, wherein the user ID comprises:
an account registered by the user at the sales agency; or
an account allocated by a system of the sales agency to the user when the user initiates a purchase operation at the sales agency.

3. The method according to claim 2, wherein the user ID comprises:
a digest value obtained through hash calculation on one or more pieces of information of the user.

4. The method according to claim 3, wherein the user ID comprises:
a digest value obtained through salting hash calculation on one or more pieces of information of the user.

5. The method according to claim 1, wherein the user ID in the data sharing request is encrypted; and/or
wherein the data sharing request comprises a signature of the financial institution; and/or
before the sending, by the financial institution, a data sharing request to the sales agency, further comprising:
verifying, by the financial institution, an identity of the sales agency.

6. The method according to claim 1, wherein the sending, by the financial institution, the data sharing request to the sales agency by using the privacy computing unit comprises:
sending, by the financial institution, the data sharing request to the sales agency by using the privacy computing unit on a blockchain.

7. The method according to claim 1, wherein the sending, by the financial institution, the data sharing request to the sales agency by using the privacy computing unit comprises:
sending, by the financial institution, the data sharing request to the sales agency by using a privacy computing unit off a blockchain.

8. The method according to claim 6, wherein the sending, by the financial institution, the data sharing request to the sales agency by using the privacy computing unit comprises:
sending, by the financial institution, the data sharing request to the privacy computing unit by initiating a transaction for invoking the first smart contract, and then sending, by the privacy computing unit, the data sharing request to the sales agency.

9. The method according to claim 6,
wherein the data sharing request is signed by the privacy computing unit, and the sales agency verifies the signature by using a public key of the privacy computing unit;
or
the data sharing request is signed by the first smart contract, and the sales agency verifies the signature by using a public key of the first smart contract.

10. The method according to claim 1,
wherein the performing, by the privacy computing unit, matching on the decrypted user basic data comprises:
executing, by the privacy computing unit, the second smart contract to perform matching on the decrypted user basic data.

11. The method according to claim 1 or 10, before the obtaining, by the privacy computing unit from the sales agency, the encrypted user basic data corresponding to the user ID, further comprising:
proving, by the privacy computing unit, an identity of the privacy computing unit to the sales agency.

12. The method according to claim 1, wherein the method further comprises:
sending, by the privacy computing unit, a proof of the matching result to a blockchain,
wherein the proof of the matching result comprises a verifiable claim signed by the privacy computing unit,
wherein the sending, by the privacy computing unit, the matching result to the financial institution comprises:
sending, by the privacy computing unit, the verifiable claim signed by the privacy computing unit to the financial institution; and
after the sending, by the privacy computing unit, a proof of the matching result to the financial institution, the method further comprises:
verifying, by a regulatory organization, a signature of the verifiable claim at the financial institution by using a public key of the privacy computing unit.

13. An information sharing system, comprising: a sales agency; a financial institution; and a privacy computing unit, wherein the information sharing system is configured to perform a method according to any one of claims 1 to 12.

14. An information sharing method performed by a privacy computing unit, the method comprising:
obtaining, by the privacy computing unit from a sales agency, encrypted user basic data corresponding to a user ID, and decrypting the encrypted user basic data, so as to perform matching on the decrypted user basic data to obtain a matching result; and
sending, by the privacy computing unit, the matching result to a financial institution,
wherein a first smart contract is deployed in the privacy computing unit, and the first smart contract is used to receive an invoking request sent by the financial institution, and in response to the invoking request, send the data sharing request to the sales agency, and
wherein the obtaining, by the privacy computing unit from the sales agency, the encrypted user basic data corresponding to the user ID, and decrypting the encrypted user basic data comprises:
receiving, by the privacy computing unit, a transaction that is initiated by the sales agency and that invokes a second smart contract deployed at the privacy computing unit, wherein parameters in the transaction comprise the user ID and the encrypted user basic data corresponding to the user ID; and
decrypting, by the privacy computing unit, the encrypted user basic data.

15. A privacy computing unit configured to perform the method of claim 14.

## Patentansprüche

1. Informationsaustauschverfahren, umfassend:
Empfangen (310), durch eine Verkaufsagentur, von Benutzerbasisdaten eines Benutzers und Senden einer Benutzer-ID des Benutzers an ein Finanzinstitut;
Senden (320), durch das Finanzinstitut, einer Datenaustauschanforderung an die Verkaufsagentur unter Verwendung einer Datenschutzrecheneinheit, wobei die Datenaustauschanforderung die Benutzer-ID umfasst, die Benutzerbasisdaten entspricht, von denen erwartet wird, dass sie ausgetauscht werden;
Erhalten (330), durch die Datenschutzrecheneinheit von der Verkaufsagentur, von verschlüsselten Benutzerbasisdaten, die der Benutzer-ID entsprechen, und Entschlüsseln der verschlüsselten Benutzerbasisdaten, um einen Abgleich an den entschlüsselten Benutzerbasisdaten durchzuführen, um ein Abgleichergebnis zu erhalten; und
Senden (340), durch die Datenschutzrecheneinheit, des Abgleichergebnisses an das Finanzinstitut,
wobei ein erster Smart Contract in der Datenschutzrecheneinheit eingesetzt wird und der erste Smart Contract verwendet wird, um eine Aufrufanforderung zu empfangen, die durch das Finanzinstitut gesendet wird, und als Reaktion auf die Aufrufanforderung die Datenaustauschanforderung an die Verkaufsagentur zu senden, und
wobei das Erhalten, durch die Datenschutzrecheneinheit von der Verkaufsagentur, der verschlüsselten Benutzerbasisdaten, die der Benutzer-ID entsprechen, und das Entschlüsseln der verschlüsselten Benutzerbasisdaten umfasst:
Empfangen, durch die Datenschutzrecheneinheit, einer Transaktion, die durch die Verkaufsagentur initiiert wird und die einen zweiten Smart Contract aufruft, der in der Datenschutzrecheneinheit eingesetzt wird, wobei Parameter in der Transaktion die Benutzer-ID und die verschlüsselten Benutzerbasisdaten, die der Benutzer-ID entsprechen, umfassen; und
Entschlüsseln, durch die Datenschutzrecheneinheit, der verschlüsselten Benutzerbasisdaten.

2. Verfahren nach Anspruch 1, wobei die Benutzer-ID umfasst:
ein Konto, das durch den Benutzer in der Verkaufsagentur registriert wird; oder
ein Konto, das durch ein System der Verkaufsagentur dem Benutzer zugewiesen wird, wenn der Benutzer einen Kaufvorgang in der Verkaufsagentur initiiert.

3. Verfahren nach Anspruch 2, wobei die Benutzer-ID umfasst:
einen Auszugswert, der durch Hash-Berechnung einer oder mehrerer Informationen des Benutzers erhalten wird.

4. Verfahren nach Anspruch 3, wobei die Benutzer-ID umfasst:
einen Auszugswert, der durch Salting-Hash-Berechnung einer oder mehrerer Informationen des Benutzers erhalten wird.

5. Verfahren nach Anspruch 1, wobei die Benutzer-ID in der Datenaustauschanforderung verschlüsselt ist; und/oder
wobei die Datenaustauschanforderung eine Signatur des Finanzinstituts umfasst; und/oder
vor dem Senden, durch das Finanzinstitut, einer Datenaustauschanforderung an die Verkaufsagentur, ferner umfassend:
Verifizieren, durch das Finanzinstitut, einer Identität der Verkaufsagentur.

6. Verfahren nach Anspruch 1, wobei das Senden, durch das Finanzinstitut, der Datenaustauschanforderung an die Verkaufsagentur unter Verwendung der Datenschutzrecheneinheit umfasst:
Senden, durch das Finanzinstitut, der Datenaustauschanforderung an die Verkaufsagentur unter Verwendung der Datenschutzrecheneinheit auf einer Blockchain.

7. Verfahren nach Anspruch 1, wobei das Senden, durch das Finanzinstitut, der Datenaustauschanforderung an die Verkaufsagentur unter Verwendung der Datenschutzrecheneinheit umfasst:
Senden, durch das Finanzinstitut, der Datenaustauschanforderung an die Verkaufsagentur unter Verwendung einer Datenschutzrecheneinheit außerhalb einer Blockchain.

8. Verfahren nach Anspruch 6, wobei das Senden, durch das Finanzinstitut, der Datenaustauschanforderung an die Verkaufsagentur unter Verwendung der Datenschutzrecheneinheit umfasst:
Senden, durch das Finanzinstitut, der Datenaustauschanforderung an die Datenschutzrecheneinheit durch Initiieren einer Transaktion zum Aufrufen des ersten Contracts und dann Senden, durch die Datenschutzrecheneinheit, der Datenaustauschanforderung an die Verkaufsagentur.

9. Verfahren nach Anspruch 6,
wobei die Datenaustauschanforderung durch die Datenschutzrecheneinheit signiert ist und die Verkaufsagentur die Signatur unter Verwendung eines öffentlichen Schlüssels der Datenschutzrecheneinheit verifiziert; oder
die Datenaustauschanforderung durch den ersten Smart Contract signiert ist und die Verkaufsagentur die Signatur unter Verwendung eines öffentlichen Schlüssels des ersten Smart Contracts verifiziert.

10. Verfahren nach Anspruch 1,
wobei das Durchführen, durch die Datenschutzrecheneinheit, eines Abgleichs an den entschlüsselten Benutzerbasisdaten umfasst:
Ausführen, durch die Datenschutzrecheneinheit, des zweiten Smart Contracts, um einen Abgleich an den entschlüsselten Benutzerbasisdaten durchzuführen.

11. Verfahren nach Anspruch 1 oder 10, vor dem Erhalten, durch die Datenschutzrecheneinheit von der Verkaufsagentur, der verschlüsselten Benutzerbasisdaten, die der Benutzer-ID entsprechen, ferner umfassend:
Nachweisen, durch die Datenschutzrecheneinheit, einer Identität der Datenschutzrecheneinheit gegenüber der Verkaufsagentur.

12. Verfahren nach Anspruch 1, wobei das Verfahren ferner umfasst:
Senden, durch die Datenschutzrecheneinheit, eines Nachweises des Abgleichergebnisses an eine Blockchain,
wobei der Nachweis des Abgleichergebnisses einen verifizierbaren Anspruch umfasst, der durch die Datenschutzrecheneinheit signiert ist,
wobei das Senden, durch die Datenschutzrecheneinheit, des Abgleichergebnisses an das Finanzinstitut umfasst:
Senden, durch die Datenschutzrecheneinheit, des verifizierbaren Anspruchs, der durch die Datenschutzrecheneinheit signiert ist, an das Finanzinstitut; und
nach dem Senden, durch die Datenschutzrecheneinheit, eines Nachweises des Abgleichergebnisses an das Finanzinstitut, das Verfahren ferner umfasst:
Verifizieren, durch eine Regulierungsorganisation, einer Signatur des verifizierbaren Anspruchs beim Finanzinstitut unter Verwendung eines öffentlichen Schlüssels der Datenschutzrecheneinheit.

13. Informationsaustauschsystem, umfassend: eine Verkaufsagentur; ein Finanzinstitut; und eine Datenschutzrecheneinheit, wobei das Informationsaustauschsystem eingerichtet ist, ein Verfahren nach einem der Ansprüche 1 bis 12 durchzuführen.

14. Informationsaustauschverfahren, durchgeführt durch eine Datenschutzrecheneinheit, das Verfahren umfassend:
Erhalten, durch die Datenschutzrecheneinheit von einer Verkaufsagentur, von verschlüsselten Benutzerbasisdaten, die einer Benutzer-ID entsprechen, und Entschlüsseln der verschlüsselten Benutzerbasisdaten, um einen Abgleich an den entschlüsselten Benutzerbasisdaten durchzuführen, um ein Abgleichergebnis zu erhalten; und
Senden, durch die Datenschutzrecheneinheit, des Abgleichergebnisses an ein Finanzinstitut,
wobei ein erster Smart Contract in der Datenschutzrecheneinheit eingesetzt wird und der erste Smart Contract verwendet wird, um eine Aufrufanforderung zu empfangen, die durch das Finanzinstitut gesendet wird, und als Reaktion auf die Aufrufanforderung die Datenaustauschanforderung an die Verkaufsagentur zu senden, und
wobei das Erhalten, durch die Datenschutzrecheneinheit von der Verkaufsagentur, der verschlüsselten Benutzerbasisdaten, die der Benutzer-ID entsprechen, und das Entschlüsseln der verschlüsselten Benutzerbasisdaten umfasst:
Empfangen, durch die Datenschutzrecheneinheit, einer Transaktion, die durch die Verkaufsagentur initiiert wird und die einen zweiten Smart Contract aufruft, der in der Datenschutzrecheneinheit eingesetzt wird, wobei Parameter in der Transaktion die Benutzer-ID und die verschlüsselten Benutzerbasisdaten, die der Benutzer-ID entsprechen, umfassen; und
Entschlüsseln, durch die Datenschutzrecheneinheit, der verschlüsselten Benutzerbasisdaten.

15. Datenschutzrecheneinheit, die eingerichtet ist, das Verfahren nach Anspruch 14 durchzuführen.

## Revendications

1. Procédé de partage d'informations, comprenant :
la réception (310), par une agence commerciale, de données de base d'utilisateur d'un utilisateur, et l'envoi d'un ID d'utilisateur de l'utilisateur à une institution financière ;
l'envoi (320), par l'institution financière, d'une demande de partage de données à l'agence commerciale en utilisant une unité informatique de confidentialité, dans lequel la demande de partage de données comprend l'ID d'utilisateur correspondant à des données de base d'utilisateur qui devraient être partagées ;
l'obtention (330), par l'unité informatique de confidentialité et de l'agence commerciale, de données de base d'utilisateur chiffrées correspondant à l'ID d'utilisateur, et le déchiffrement des données de base d'utilisateur chiffrées, de manière à effectuer une mise en correspondance sur les données de base d'utilisateur déchiffrées pour obtenir un résultat de mise en correspondance ; et
l'envoi (340), par l'unité informatique de confidentialité, du résultat de mise en correspondance à l'institution financière,
dans lequel un premier contrat intelligent est déployé dans l'unité informatique de confidentialité, et le premier contrat intelligent est utilisé pour recevoir une demande d'invocation envoyée par l'institution financière, et en réponse à la demande d'invocation, envoyer la demande de partage de données à l'agence commerciale, et
dans lequel l'obtention, par l'unité informatique de confidentialité et de l'agence commerciale, des données de base d'utilisateur chiffrées correspondant à l'ID d'utilisateur, et le déchiffrement des données de base d'utilisateur chiffrées comprennent :
la réception, par l'unité informatique de confidentialité, d'une transaction qui est initiée par l'agence commerciale et qui invoque un second contrat intelligent déployé au niveau de l'unité informatique de confidentialité, dans lequel des paramètres dans la transaction comprennent l'ID d'utilisateur et les données de base d'utilisateur chiffrées correspondant à l'ID d'utilisateur ; et
le déchiffrement, par l'unité informatique de confidentialité, des données de base d'utilisateur chiffrées.

2. Procédé selon la revendication 1, dans lequel l'ID d'utilisateur comprend :
un compte enregistré par l'utilisateur au niveau de l'agence commerciale ; ou
un compte attribué par un système de l'agence commerciale à l'utilisateur lorsque l'utilisateur initie une opération d'achat au niveau de l'agence commerciale.

3. Procédé selon la revendication 2, dans lequel l'ID d'utilisateur comprend :
une valeur de condensé obtenue par un calcul de hachage sur un ou plusieurs éléments d'information de l'utilisateur.

4. Procédé selon la revendication 3, dans lequel l'ID d'utilisateur comprend :
une valeur de condensé obtenue par un calcul de hachage salé sur un ou plusieurs éléments d'information de l'utilisateur.

5. Procédé selon la revendication 1, dans lequel l'ID d'utilisateur dans la demande de partage de données est chiffré ; et/ou
dans lequel la demande de partage de données comprend une signature de l'institution financière ; et/ou
comprenant en outre, avant l'envoi, par l'institution financière, d'une demande de partage de données à l'agence commerciale :
la vérification, par l'institution financière, d'une identité de l'agence commerciale.

6. Procédé selon la revendication 1, dans lequel l'envoi, par l'institution financière, de la demande de partage de données à l'agence commerciale en utilisant l'unité informatique de confidentialité comprend :
l'envoi, par l'institution financière, de la demande de partage de données à l'agence commerciale en utilisant l'unité informatique de confidentialité sur une chaîne de blocs.

7. Procédé selon la revendication 1, dans lequel l'envoi, par l'institution financière, de la demande de partage de données à l'agence commerciale en utilisant l'unité informatique de confidentialité comprend :
l'envoi, par l'institution financière, de la demande de partage de données à l'agence commerciale en utilisant une unité informatique de confidentialité hors chaîne de blocs.

8. Procédé selon la revendication 6, dans lequel l'envoi, par l'institution financière, de la demande de partage de données à l'agence commerciale en utilisant l'unité informatique de confidentialité comprend :
l'envoi, par l'institution financière, de la demande de partage de données à l'unité informatique de confidentialité en initiant une transaction pour invoquer le premier contrat, puis l'envoi, par l'unité informatique de confidentialité, de la demande de partage de données à l'agence commerciale.

9. Procédé selon la revendication 6,
dans lequel la demande de partage de données est signée par l'unité informatique de confidentialité, et l'agence commerciale vérifie la signature en utilisant une clé publique de l'unité informatique de confidentialité ; ou
la demande de partage de données est signée par le premier contrat intelligent, et l'agence commerciale vérifie la signature en utilisant une clé publique du premier contrat intelligent.

10. Procédé selon la revendication 1,
dans lequel l'exécution, par l'unité informatique de confidentialité, d'une mise en correspondance sur les données de base d'utilisateur déchiffrées comprend :
l'exécution, par l'unité informatique de confidentialité, du second contrat intelligent pour effectuer une mise en correspondance sur les données de base d'utilisateur déchiffrées.

11. Procédé selon la revendication 1 ou 10, comprenant en outre, avant l'obtention, par l'unité informatique de confidentialité et de l'agence commerciale, des données de base d'utilisateur chiffrées correspondant à l'ID d'utilisateur :
la fourniture d'une preuve, par l'unité informatique de confidentialité, d'une identité de l'unité informatique de confidentialité à l'agence commerciale.

12. Procédé selon la revendication 1, dans lequel le procédé comprend en outre :
l'envoi, par l'unité informatique de confidentialité, d'une preuve du résultat de mise en correspondance à une chaîne de blocs,
dans lequel la preuve du résultat de mise en correspondance comprend une revendication vérifiable signée par l'unité informatique de confidentialité,
dans lequel l'envoi, par l'unité informatique de confidentialité, du résultat de mise en correspondance à l'institution financière comprend :
l'envoi, par l'unité informatique de confidentialité, de la revendication vérifiable signée par l'unité informatique de confidentialité à l'institution financière ; et
dans lequel le procédé comprend en outre, après l'envoi, par l'unité informatique de confidentialité, d'une preuve du résultat de mise en correspondance à l'institution financière :
la vérification, par une organisation réglementaire, d'une signature de la revendication vérifiable au niveau de l'institution financière en utilisant une clé publique de l'unité informatique de confidentialité.

13. Système de partage d'informations, comprenant : une agence commerciale ; une institution financière ; et une unité informatique de confidentialité, dans lequel le système de partage d'informations est configuré pour exécuter un procédé selon l'une quelconque des revendications 1 à 12.

14. Procédé de partage d'informations exécuté par une unité informatique de confidentialité, le procédé comprenant :
l'obtention, par l'unité informatique de confidentialité et d'une agence commerciale, de données de base d'utilisateur chiffrées correspondant à un ID d'utilisateur, et le déchiffrement des données de base d'utilisateur chiffrées, de manière à effectuer une mise en correspondance sur les données de base d'utilisateur déchiffrées pour obtenir un résultat de mise en correspondance ; et
l'envoi, par l'unité informatique de confidentialité, du résultat de mise en correspondance à une institution financière,
dans lequel un premier contrat intelligent est déployé dans l'unité informatique de confidentialité, et le premier contrat intelligent est utilisé pour recevoir une demande d'invocation envoyée par l'institution financière, et en réponse à la demande d'invocation, envoyer la demande de partage de données à l'agence commerciale, et
dans lequel l'obtention, par l'unité informatique de confidentialité et de l'agence commerciale, des données de base d'utilisateur chiffrées correspondant à l'ID d'utilisateur, et le déchiffrement des données de base d'utilisateur chiffrées comprennent :
la réception, par l'unité informatique de confidentialité, d'une transaction qui est initiée par l'agence commerciale et qui invoque un second contrat intelligent déployé au niveau de l'unité informatique de confidentialité, dans lequel des paramètres dans la transaction comprennent l'ID d'utilisateur et les données de base d'utilisateur chiffrées correspondant à l'ID d'utilisateur ; et
le déchiffrement, par l'unité informatique de confidentialité, des données de base d'utilisateur chiffrées.

15. Unité informatique de confidentialité configurée pour exécuter le procédé selon la revendication 14.
